(19) **Europäisches Patentamt / European Patent Office / Office européen des brevets**

(11) **EP 2 444 831 A1**

(12) **EUROPEAN PATENT APPLICATION**
published in accordance with Art. 153(4) EPC

(43) Date of publication:
25.04.2012 Bulletin 2012/17

(51) Int Cl.:
*G02B 13/18* (2006.01)    *G02B 9/14* (2006.01)

(21) Application number: 10838369.6

(86) International application number:
PCT/CN2010/076456

(22) Date of filing: 30.08.2010

(87) International publication number:
WO 2011/147136 (01.12.2011 Gazette 2011/48)

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(30) Priority: 28.05.2010 CN 201010185833

(71) Applicant: Zhejiang Sunny Optics Co., Ltd.
Yuyao, Zhejiang 315400 (CN)

(72) Inventors:
• DAI, Fujian
Yuyao
Zhejiang 315400 (CN)

• HUANG, Lin
Yuyao
Zhejiang 315400 (CN)
• LI, Huan
Yuyao
Zhejiang 315400 (CN)

(74) Representative: Pidgeon, Robert John et al
Appleyard Lees
15 Clare Road
Halifax
West Yorkshire HX1 2HY (GB)

(54) **MICRO CAMERA LENS**

(57)    The present invention discloses a micro camera lens, comprising three aspheric lenses and a diaphragm, wherein, the three lenses have positive diopter, negative diopter, and positive diopter, respectively, and meet the following expression: VP1>50 and VP2<35; Where, VP1 and VP2 are Abbe numbers of the first lens and second lens, respectively. Since the micro camera lens provided in the present invention employs a combination of aspheric lens, the resolving power of the entire lens is enhanced, and the lens has excellent imaging quality; in addition, in an appropriate optical parameter design, the lens has lower tolerance sensitivity and improved tolerance limit, and can be produced reliably by mass production. Thus, the micro camera lens provided in the present invention attains favorable technical efficacies.

Figure 2

**Description**

**Field of the Invention**

The present invention relates to an optical imaging system of lens, in particular to a high-quality and tolerance-insensitive micro lens composed of three aspheric lenses.

**Background of the Invention**

Micro camera lenses have been researched and developed widely in the prior art; especially, camera lenses composed of three lenses have been developed rapidly. However, how to design the specific structural parameters to attain better optical effect has always been a major challenge in the optical lens manufacturing industry.

Usually, high-quality camera lenses are implemented with one or more aspheric lenses, because aspheric lenses have preferable radius of curvature and can maintain good aberration correction performance, and thereby improves the overall resolution and quality of the camera lens. But it is easy for such a design to result in low tolerance limit and increased lens processing requirements, bring difficulties in maintaining stable quality in mass production. In contrast, most known products with better tolerance limit have poor imaging quality.

Tolerance limit is quite challenging, and is the main aspect that was neglected in conventional optical design. But today, tolerance limit is of great significance. As we know, if the parameters of a product are over-optimized, the requirements for manufacturing will be very high, resulting in decreased yield rate, increased manufacturing cost, and degraded competitiveness of the final product. Therefore, in lens design, the optimization must be made in consideration of mass production, that is, efforts must be made to improve the tolerance limit of the product, to design a high-quality lens that has satisfactory imaging quality, requires low manufacturing cost, and can maintain quality stability in mass production,

The optical lens disclosed in Chinese Patent Application No. 200510035220.9 is an optical system composed of three lens, which, when counted from the object side to the image side, includes: a first bi-convex lens with positive diopter, a second concave-convex lens with negative diopter, and a third concave-convex lens with negative diopter. Though the third lens in the patent has good tolerance limit (5$\mu$m eccentricity tolerance), the eccentricity tolerance of the first lens is 2$\mu$m, and the eccentricity tolerance of the second lens is 2$\mu$m. Therefore, the requirement for processing accuracy is very high, and is difficult to meet.

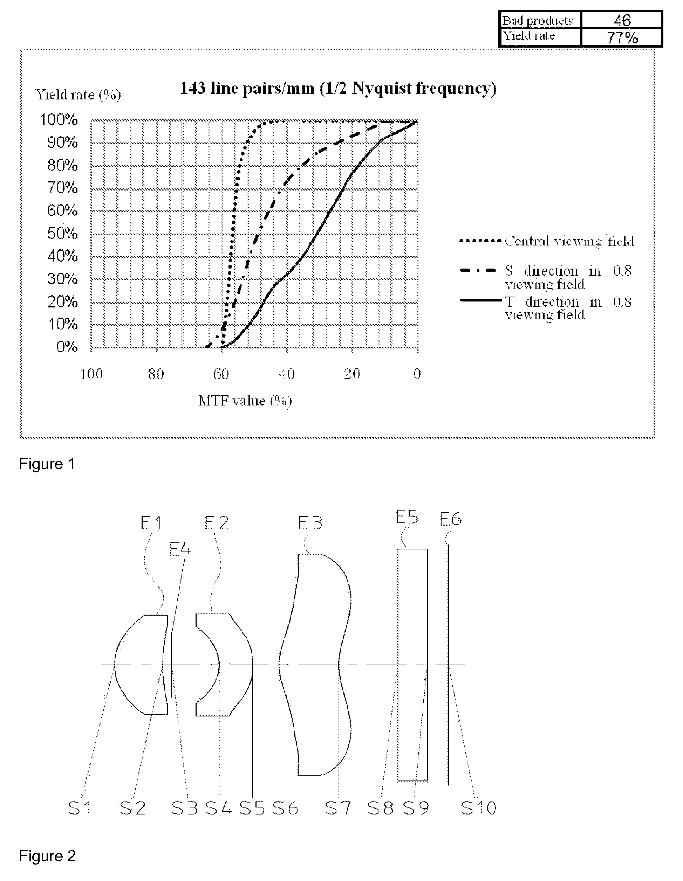

Figure 1 is a Monte Carlo yield analysis chart of the patented product. As shown in Figure 1, the yield rate is only 77% at 1/2 Nyquist frequency.

In view of above problems, the present invention puts forward a new optical lens structure, which employs a combination of aspheric lenses and specific optical parameter design, and can effectively overcome the drawback of poor tradeoff between high quality and low tolerance sensitivity.

**Summary of the Invention**

To overcome the drawbacks in the prior art, the present invention provides a high quality and tolerance-insensitive micro camera lens. The technical solutions of the present invention are as follows:

The micro camera lens provided in the present invention comprises three aspheric lenses and a diaphragm, wherein, the three aspheric lenses are in sequence a first lens, a second lens, and a third lens, when counted from the object side to the image side; the diopter values of the lenses are positive, negative, and positive; the lenses meet the following expressions:

$$VP1 > 50,$$

and

$$VP2 < 35;$$

Where, VP1 and VP2 are Abbe numbers of the first lens and second lens, respectively.

Moreover, a preferred structure is, the diaphragm is arranged between the first lens and the second lens.

Furthermore, a preferred structure is: the lenses meet the following relational expression:

$$1.0 < |f2/f1| < 5$$

$$1.0 < |P2R2/P1R1| < 5$$

$$0.4 < (P1R2 - P1R1)/(P1R1+P1R2)$$

Where, f1 is the focal length of the first lens;
f2 is the focal length of the second lens;
P1R1 is the radius of curvature of the first lens at the object side;
P1R2 is the radius of curvature of the first lens at the image side;
P2R2 is the radius of curvature of the second lens at the image side.

Furthermore, a preferred structure is: the first lens is a meniscus lens, the second lens is a meniscus lens, and the third lens is a bow-shaped lens.

Furthermore, a preferred structure is: the convex side of the first lens faces the object side, the convex side of the second lens faces the image side, and the central convex part of the third lens faces the object side.

Furthermore, a preferred structure is: the lenses meet the following expression:

$$0.4 < (P1R2 - P1R1)/(P1R1+P1R2) \leq 0.5$$

Where, P1R1 is the radius of curvature of the first lens at the object side;

P1R2 is the radius of curvature of the first lens at the image side.

Since the micro camera lens provided in the present invention employs a combination of aspheric lens, the resolving power of the entire lens is enhanced, and the lens has excellent imaging quality; in addition, through the appropriate optical parameter design, the lens has lower tolerance sensitivity, and can be produced reliably by mass production. Thus, the micro camera lens provided in the present invention attains favorable technical efficacies.

**Brief Description of the Drawings**

The above characteristics and advantages of the present invention will be understood more clearly and easily in the following description of the illustrative embodiments, with reference to the accompanying drawings.

Figure 1 shows an Monte Carlo yield analysis chart of a micro camera lens disclosed in the prior art;

Figure 2 shows the structure of the micro camera lens in Embodiment 1 of the present invention;

Figure 3 shows an axial chromatic aberration image of the micro camera lens in Embodiment 1 of the present invention;

Figure 4 shows an astigmatism image of the micro camera lens in Embodiment 1 of the present invention;

Figure 5 shows a distortion image of the micro camera lens in Embodiment 1 of the present invention;

Figure 6 shows an image of chromatic aberration of magnification of the micro camera lens in Embodiment 1 of the present invention;

Figure 7 shows a Monte Carlo yield analysis chart of the micro camera lens in Embodiment 1 of the present invention;

Figure 8 shows the structure of the micro camera lens in Embodiment 2 of the present invention;

Figure 9 shows an axial chromatic aberration image of the micro camera lens in Embodiment 2 of the present invention;

Figure 10 shows an astigmatism image of the micro camera lens in Embodiment 2 of the present invention;

Figure 11 shows a distortion image of the micro camera lens in Embodiment 2 of the present invention;

Figure 12 shows an image of chromatic aberration of magnification of the micro camera lens in Embodiment 2 of the present invention;

Figure 13 shows a Monte Carlo yield analysis chart of the micro camera lens in Embodiment 2 of the present invention.

**Detailed Description of the Embodiments**

Hereunder the embodiments of the present invention will be described in detail, with reference to the accompanying drawings.
In view of the problem that most optical lens in the prior art are designed mainly with the aim to improve imaging quality without due consideration of tolerance limit, the present invention puts forward a micro camera lens which has high imaging quality and improved tolerance limit.
The micro camera lens provided in the present invention comprises three aspheric lenses and a diaphragm, wherein, the three lenses have positive diopter, negative diopter, and positive diopter, respectively, and meet the following expression:

$$VP1 > 50,$$

and

$$VP2 < 35;$$

Where, VP1 and VP2 are Abbe numbers of the first lens and second lens, respectively.
Here, the three aspheric lenses are defined as first lens, second lens, and third lens, when counted from the object side to the image side.
By selecting the lens types and diopter values appropriately and determining the conditions met by VP1 and VP2, the chromatic aberration and vertical axial aberration can be reduced significantly, and the imaging quality as well as the tolerance limit can be improved. In the present invention, there is no special restriction to the Abbe number VP3 of the third lens, that is to say, the third lens can be any ordinary lens in the field, as long as it is an aspheric lens with positive diopter.
In the present invention, there is no special restriction to the position of the diaphragm. Preferably, the diaphragm can be mounted between the first lens and the second lens, so as to reduce the aberration and improve imaging quality.
In the present invention, there is no special restriction to the shapes of the aspheric lenses, that is to say, the aspheric lenses can be in an appropriate shape, respectively, as long as the above requirements for diopter and Abbe number are met. For example, the aspheric lenses can be convexo-convex lenses, convexo-plane lenses, bi-concave lenses, meniscus lenses, or bow-shaped lenses. However, for improving the imaging quality, preferably the first lens is a meniscus lens, the second lens is a meniscus lens, and the third lens is a bow-shaped lens. More preferably, the convex side of the first lens faces the object side, the convex side of the second lens faces the image side, and the central convex part of the third lens faces the object side.
In general, tolerance limit is a complex problem, and is affected by many factors. Though a large quantity of experiments, the inventor finds out that the functional relation between focal length and radius of curvature of lens has very important influence on the tolerance sensitivity. When the focal length and radius of curvature of lens are in the following relation with each other, the tolerance sensitivity of the lens can be reduced significantly, and the tolerance limit of the produce can be improved.

$$1.0 < |f2/f1| < 5;$$

$$1.0< |P2R2/P1R1| <5$$

$$0.4< (P1R2 - P1R1)/(P1R1+P1R2)$$

Where, f1 is the focal length of the first lens;
f2 is the focal length of the second lens;
P1R1 is the radius of curvature of the first lens at the object side;
P1R2 is the radius of curvature of the first lens at the image side;
P2R2 is the radius of curvature of the second lens at the image side.

More preferably, the radius of curvature of the respective lens should meet: 0.4< (P1R2 - P1R1)/(P1R1+P1R2) ≤ 0.5. When the above condition is met, the tolerance limit of the lens can be further improved.

Hereunder the present invention will be further detailed in the embodiments,

(Embodiment 1)

Figure 2 shows the structure of the micro camera lens in Embodiment 1 of the present invention. As shown in Figure 2, the micro camera lens comprises three aspheric lenses. In addition, when counted from the object side to the image side along the optical axis, the elements include: a first lens E1 with positive diopter, a diaphragm E4, a second lens E2 with negative diopter, a third lens E3 with positive diopter, a filter E5, and an imaging plane E6.

In this embodiment, the first lens is a meniscus convex-concave lens, with the convex side facing the object side and the concave side facing the image side; the second lens is a meniscus concave-convex lens, with the concave side facing the object side and the convex side facing the image side; the third lens is a bow-shaped convex-concave lens, with the convex side facing the object side, the concave side facing the image side, and the central convex part facing the object side.

The Abbe number VP1 of the first lens E1 is VP1=56.1. and the Abbe number VP2 of the second lens E2 is VP2=23.0.

In addition, to further improve the imaging quality, in Embodiment 1, a diaphragm E4 is mounted between the first lens E1 and the second lens E2; alternatively, the diaphragm can be mounted at a different position.

In this embodiment, the focal length f1 of the first lens is 2.50, the focal length f2 of the second lens is -3.79, and the focal length f3 of the third lens is 4.53; the focal length f of the entire lens assembly is 2.79. The radius of curvature P1R1 of the first lens at the object side is 1.2000, the radius of curvature P1R2 of the first lens at the image side is 3.4500, and the radius of curvature P2R2 of the second lens at the image side is -1.4682.

Based on the values of focal length and radius of curvature described above, the following results are obtained: |f2/f1| is equal to 1.516, |P2R2/P1R1| is equal to 1.2235, and (P1R2-P1R1) /(P1R1+P1R2) is equal to 0.4838.

Hereunder the micro camera lens in the Embodiment 1 will be described with reference to the drawings and tables, to make the above characteristics and advantages of the present invention understood more clearly and easily.

Table 1 and Table 2 list the relevant parameters of the lenses in Embodiment 1, including the surface type, radius of curvature, thickness, material, effective diameter, and cone factor of the lenses.

Counted from the object side in parallel to the optical axis, the lenses are numbered consecutively; the sides of the first lens E1 are denoted as S1 and S2; the diaphragm surface is denoted as S3; the sides of the second lens E2 are denoted as S4 and S5; the sides of the third lens E3 are denoted as S6 and S7; the sides of the filter E6 are denoted as S8 and S9; the imaging plane is denoted as S10.

System parameters: 1/5" sensor device, aperture value=2.4.

Table 1

| SIDE NO. (S) | SURFACE TYPE | RADIUS OF CURVATURE (R) | THICKNESS (D) | MATERIAL | EFFECTIVE DIAMETER (D) | CONE FACTOR (K) |
|---|---|---|---|---|---|---|
| Object Side | Spheric | Infinite | 1500 | | 1878.27 | |
| S1 | Aspheric | 1.2000 | 0.49 | 1.544 / 56.1 | 1.46 | -0,8516 |
| S2 | Aspheric | 3.4500 | 0.0898 | | 1.20 | 26.9969 |

(continued)

| SIDE NO. (S) | SURFACE TYPE | RADIUS OF CURVATURE (R) | THICKNESS (D) | MATERIAL | EFFECTIVE DIAMETER (D) | CONE FACTOR (K) |
|---|---|---|---|---|---|---|
| S3 (diaphragm) | Spheric | Infinite | 0.4831 | | 0.95 | |
| S4 | Aspheric | -0.8337 | 0.3450 | 1.640 / 23.0 | 1.12 | 0.2063 |
| S5 | Aspheric | -1.4682 | 0.2671 | | 1.50 | -14.0633 |
| S6 | Aspheric | 1.0393 | 0.61 | 1.544 / 56.1 | 2.90 | -8.9591 |
| S7 | Aspheric | 1.4390 | 0.60 | | 3.24 | -7.3348 |
| S8 | Spheric | Infinite | 0.30 | 1.517 / 64.2 | 3.40 | |
| S9 | Spheric | Infinite | 0.2165 | | 3.40 | |
| S10 | Spheric | Infinite | 0 | | 3.53 | |

Table 2 lists the high-order aspheric coefficients A4, A6, A8, A10, A12, A14, and A16 of the first lens E1, second lens E2, and third lens E3, shown as follows:

Table 2

| Side No. | A2 | A4 | A6 | A8 | A10 | A12 | A14 | A16 |
|---|---|---|---|---|---|---|---|---|
| S1 | 7.4300 E-02 | 1.1521 E-01 | 1.5825 E-01 | -4.0717 E-01 | 1.1695 E+00 | -1.3596 E+00 | -2.2241 E-04 | 1.0291 E-04 |
| S2 | 6.0067 E-03 | -7.6444 E-02 | -9.9268 E-02 | -4.8515 E-01 | -8.5732 E-01 | 2.5205 E-02 | -3.5937 E-02 | 1.3401 E-01 |
| S4 | 0 | -2.7989 E-01 | 9.5387 E-01 | -3.9240 E+00 | 2.0634 E+01 | -3.7516 E+01 | 2.9202 E+00 | 0 |
| S5 | 0 | -1.4457 E+00 | 4.4941 E+00 | -1.1719 E+01 | 2.3070 E+01 | -2.4104 E+01 | 1.0056 E+01 | 0 |
| S6 | 0 | -1.7490 E-01 | 4.5986 E-02 | 1.8575 E-01 | -2.6144 E-01 | 1.6298 E-01 | -5.1145 E-02 | 6.4576 E-03 |
| S7 | 0 | -14162 E-01 | 2.9077 E-02 | 1.0779 E-02 | -7.2071 E-03 | -2.2885 E-03 | 2.3888 E-03 | -4.8780 E-04 |

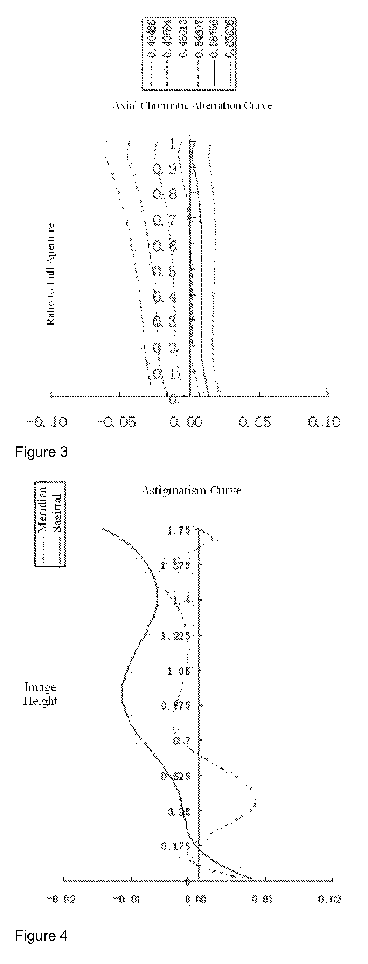

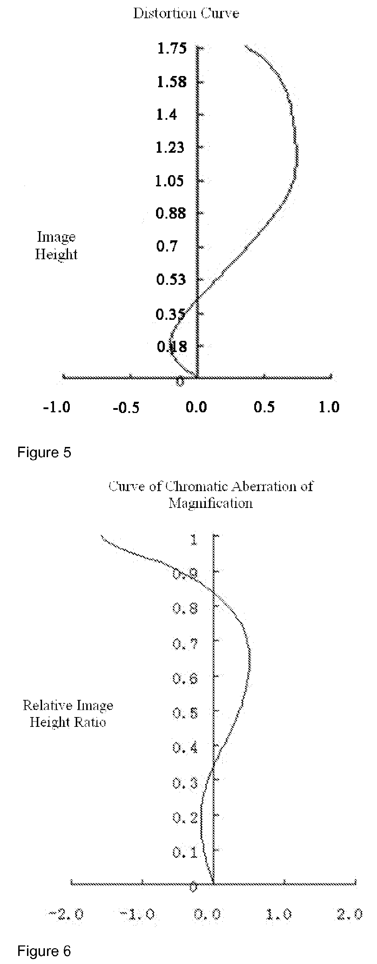

Figures 3-6 show the optical curves of the micro camera lens in Embodiment 1 of the present invention; these optical curves represent the chromatic aberration, astigmatism, distortion, and chromatic aberration of magnification, etc. of the micro camera lens in this present invention. It is seen clearly from the figures: the micro camera lens in Embodiment 1 of the present invention is significantly improved in the aspects of chromatic aberration, astigmatism, and distortion, etc., and the imaging quality of the micro camera lens is greatly improved.

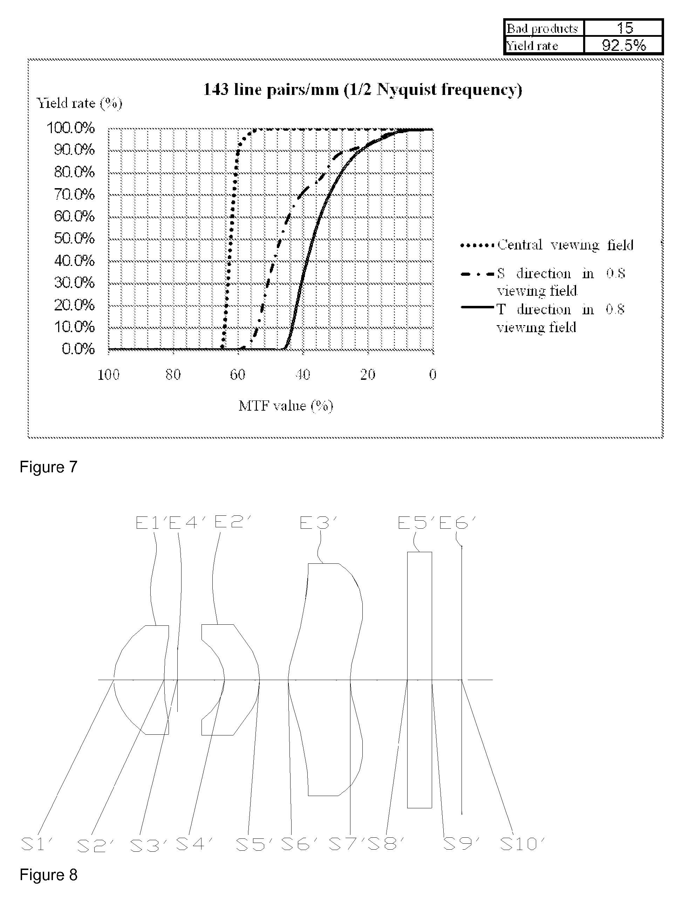

In addition, Figure 7 shows a Monte Carlo yield analysis chart of the micro camera lens in Embodiment 1 of the present invention. It is seen from Figure 7: the yield rate of the lens can be up to 92.5% at 1/2 Nyquist frequency, which is apparently higher than the yield rate of lens (77%) in the prior art.

(Embodiment 2)

Figure 8 shows the structure of the micro camera lens in Embodiment 2 of the present invention.

As shown in Figure 8, the micro camera lens in this embodiment comprises three aspheric lenses. In addition, when counted from the object side to the image side along the optical axis, the elements include: a first lens E1' with positive diopter, a diaphragm E4', a second lens E2' with negative diopter, a third lens E3' with positive diopter, a filter E5', and an imaging plane E6'.

In this embodiment, the three aspheric lenses are in the same shapes as the lenses in Embodiment 1, i.e., the first lens is a meniscus convex-concave lens, the second lens is a meniscus concave-convex lens, and the third lens is a bow-shaped convex-concave lens.

The Abbe number VP1 of the first lens E1' is VP1=56.1, and the Abbe number VP2 of the second lens E2' is VP2=23.0.

The focal length f1 of the first lens is 3.15, the focal length f2 of the second lens is -5.06, and the focal length f3 of the third lens is 5.77; the focal length f of the entire lens assembly is 3.45. The radius of curvature P1R1 of the first lens at the object side is 1.42704, the radius of curvature P1R2 of the first lens at the image side is 4.253, and the radius of curvature P2R2 of the second lens at the image side is-1,721408.

Based on the values of focal length and radius of curvature described above, the following results are obtained: |f2/f1| is equal to 1.606, |P2R2/P1R1| is equal to 1.2062, and (P1R2-P1R1)/(P1R1+P1R2) is equal to 0.4975.

Hereunder the technical efficacies of the present invention will be described with reference to the drawings and tables, to make the above characteristics and advantages of the present invention understood more clearly and easily.

Table 3 and Table 4 list the relevant parameters of the lenses in Embodiment 2, including the surface type, radius of curvature, thickness, material, effective diameter, and cone factor of the lenses.

Counted from the object side in parallel to the optical axis, the lenses are numbered consecutively; the sides of the first lens E1' are denoted as S1' and S2'; the diaphragm surface is denoted as S3'; the sides of the second lens E2' are denoted as S4' and S5'; the sides of the third lens E3' are denoted as S6' and S7'; the sides of the filter E6' are denoted as S8' and S9'; the imaging plane is denoted as S10'.

System parameters: 1/4" sensor device, aperture value=2.4.

Table 3

| SIDE NO (S) | SURFACE TYPE | RADIUS OF CURVATURE(R) | THICKNESS (D) | MATERIAL | EFFECTIVE DIAMETER (D) | CONE FACTOR (K) |
|---|---|---|---|---|---|---|
| Object Side | Spheric | Infinite | 1500 | | 1952.88 | 0 |
| S1' | Aspheric | 1.42704 | 0.61482 | 1.544000/56 | 1.86334 | -0.6837588 |
| S2' | Aspheric | 4,253 | 0.167557 | | 1.453579 | 19.11025 |
| S3' (diaphragm) | Spheric | Infinite | 0.5780616 | | 1.100396 | 0 |
| S4' | Aspheric | -1.022543 | 0.432883 | 1.640000/23 | 1.375308 | 0.1917684 |
| S5' | Aspheric | -1.721408 | 0.349818 | | 1.889881 | -12.23866 |
| S6' | Aspheric | 1.32948 | 0.7653876 | 1.544000/56 | 3.584808 | -9.633307 |
| S7' | Aspheric | 1.782853 | 0.7 | | 3.965863 | -7.376173 |
| S8' | Spheric | Infinite | 0.3 | BK7 | 4,29617 | 0 |
| S9' | Spheric | Infinite | 0.3686003 | | 4,376062 | 0 |

(continued)

| SIDE NO (S) | SURFACE TYPE | RADIUS OF CURVATURE(R) | THICKNESS (D) | MATERIAL | EFFECTIVE DIAMETER (D) | CONE FACTOR (K) |
|---|---|---|---|---|---|---|
| S10' | Spheric | Infinite | | | 4.604387 | 0 |

Table 4 lists the high-order aspheric coefficients A4, A6, A8, A10, A12, A14, and A16 of the first lens E1', second lens E2', and third lens E3', shown as follows:

Table 4

| Side No. | A2 | A4 | A6 | A8 | A10 | A12 | A14 | A16 |
|---|---|---|---|---|---|---|---|---|
| S1' | 3.473474E-02 | 4.335955E-02 | 5.617531E-02 | -1.037224E-01 | 1.674093E-01 | -1.165493E-01 | 0.000000E+00 | 0.000000E+00 |
| S2' | -1.250564E-03 | -3,140207E-02 | -2.230890E-02 | -7.384522E-02 | -8.990670E-02 | 7.875251E-02 | 0.000000E+00 | 0.000000E+00 |
| S4' | 0.000000E+00 | -1.568568E-01 | 3.617568E-01 | -8.564967E-01 | 2.703149E+00 | -2.886998E+00 | 2.219234E-01 | 0.000000E+00 |
| S5' | 0.000000E+00 | -7.439092E-01 | 1.439895E+00 | -2.388554E+00 | 3.000246E+00 | -1.988603E+00 | 5.280361E-01 | 0.000000E+00 |
| S6' | 3.795154E-03 | -8.142107E-02 | 1.441543E-03 | 5.044728E-02 | -4.049080E-02 | 1.531722E-02 | -2.942175E-03 | 2.277978E-04 |
| S7' | 0.000000E+00 | -7.174408E-02 | 9.317539E-03 | 2.175873E-03 | -9.375900E-04 | -1.930725E-04 | 1.284603E-04 | -1.666303E-05 |

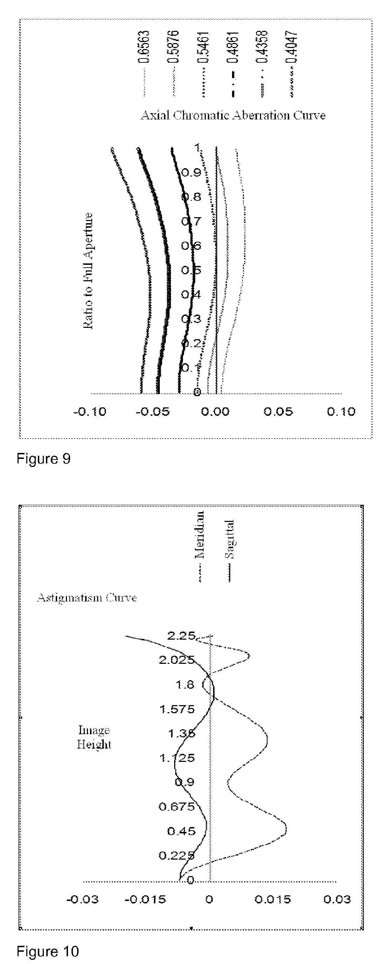

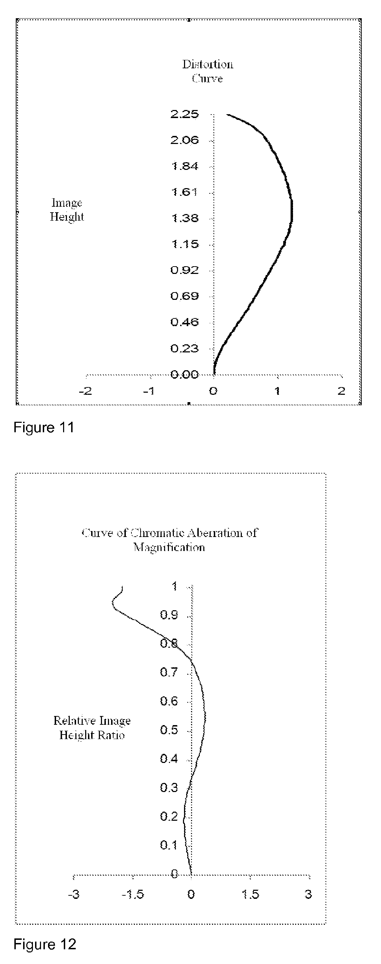

Figures 9-12 show the optical curves of the micro camera lens in Embodiment 2 of the present invention; these optical curves represent the chromatic aberration, astigmatism, distortion, and chromatic aberration of magnification, etc. of the micro camera lens in this present invention. It is seen clearly from the Figures: the micro camera lens in Embodiment 2 of the present invention is significantly improved in the aspects of chromatic aberration, astigmatism, and distortion, etc., and the imaging quality of the micro camera lens is greatly improved.

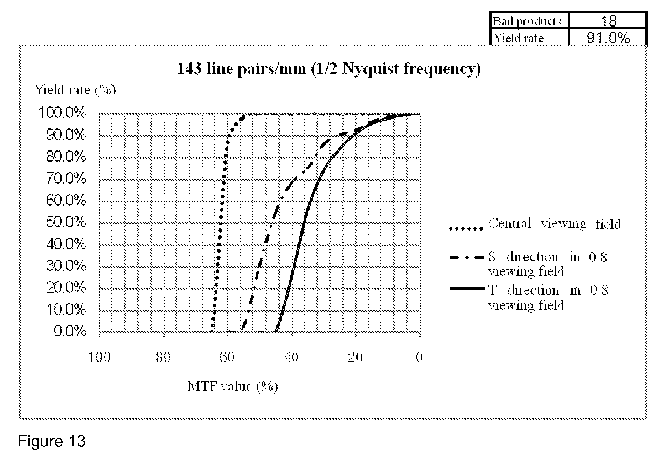

In addition, Figure 13 shows a Monte Carlo yield analysis chart of the micro camera lens in Embodiment 2 of the present invention. It is seen from Figure 13: the yield rate of the lens can be up to 91% at 1/2 Nyquist frequency, which is apparently higher than the yield rate of lens (77%) in the prior art.

In conclusion, the micro camera lens provided in the present invention not only has outstanding optical performance and high imaging quality, but also has favorable tolerance limit, and can meet the demand for mass production; in addition, stable quality can be maintained in the mass production, and therefore the production cost can be reduced greatly.

While the principle of the micro camera lens provided in the present invention is described above in embodiments, those skilled in the art can make various modifications and variations on the basis of the embodiments, without departing from the spirit of the present invention. However, any of such modifications or variations shall be deemed as failing into the protected domain of the present invention. Those skilled in the art shall appreciate that the above description is only provided to elaborate and explain the object of the present invention, instead of constituting any confinement to the present invention. The protected domain of the present invention shall only be confined by the claims and their equivalence.

**Claims**

1. A micro camera lens, comprising three aspheric lenses and a diaphragm, wherein, when counted from the object side to the image side, the three aspheric lenses are in sequence a first lens, a second lens, and a third lens, and their diopter values are positive, negative, and positive respectively; in addition, the lenses meet the following expression:

$$VP1 > 50, \text{ and } VP2 < 35;$$

where, VP1 and VP2 are Abbe numbers of the first lens and the second lens, respectively,
wherein the lenses meet the following relational expression:

$$1.516 < |f2/f1| < 5;$$

$$1.0 < |P2R2/P1R1| < 5;$$

$$0.4 < (P1R2-P1R1)/(P1R1+P1R2),$$

where, f1 is the focal length of the first lens;
f2 is the focal length of the second lens;
P1R1 is the radius of curvature of the first lens at the object side;
P1R2 is the radius of curvature of the first lens at the image side;
P2R2 is the radius of curvature of the second lens at the image side.

2. The micro camera lens according to claim 1, wherein the diaphragm is mounted between the first lens and the second lens.

3. The micro camera lens according to claim 1, wherein the first lens is a meniscus lens, the second lens is a meniscus lens, and the third lens is a bow-shaped lens.

**4.** The micro camera lens according to claim 3, wherein the convex side of the first lens faces the object side, the convex side of the second lens faces the image side, and the central convex part of the third lens faces the object side.

**5.** The micro camera lens according to claim 1, wherein the lenses meet the following expression:

$$0.4 < (P1R2 - P1R1)/(P1R1 + P1R2) \leq 0.5$$

where, P1R1 is the radius of curvature of the first lens at the object side;

P1R2 is the radius of curvature of the first lens at the image side.

| Bad products | 46 |
| Yield rate | 77% |

**143 line pairs/mm (1/2 Nyquist frequency)**

Yield rate (%)

100%
90%
80%
70%
60%
50%
40%
30%
20%
10%
0%

100   80   60   40   20   0

MTF value (%)

······· Central viewing field

— · — S direction in 0.8 viewing field

——— T direction in 0.8 viewing field

Figure 1

E1   E2   E3   E5   E6
   E4

S1   S2   S3 S4 S5 S6   S7   S8 S9   S10

Figure 2

Axial Chromatic Aberration Curve

Ratio to Full Aperture

-0.10    -0.05    0.00    0.05    0.10

Figure 3

Astigmatism Curve

Meridian
Sagittal

Image
Height

-0.02    -0.01    0.00    0.01    0.02

Figure 4

Distortion Curve

Image
Height

-1.0    -0.5    0.0    0.5    1.0

Figure 5

Curve of Chromatic Aberration of
Magnification

Relative Image
Height Ratio

-2.0    -1.0    0.0    1.0    2.0

Figure 6

| Bad products | 15 |
| Yield rate | 92.5% |

**143 line pairs/mm (1/2 Nyquist frequency)**

Figure 7

Figure 8

Figure 9

Figure 10

Figure 11

Figure 12

| Bad products | 18 |
|---|---|
| Yield rate | 91.0% |

**143 line pairs/mm (1/2 Nyquist frequency)**

Yield rate (%)

Legend:
- ...... Central viewing field
- — · — S direction in 0.8 viewing field
- ——— T direction in 0.8 viewing field

MTF value (%)

Figure 13

# INTERNATIONAL SEARCH REPORT

| | International application No. |
|---|---|
| | PCT/CN2010/076456 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC:G02B, G03B

Documentation searched other than minimum documentation to the extent that such documents are included in the fields searched

Electronic data base consulted during the international search (name of data base and, where practicable, search terms used)

CPRSABS, VEN: LENS+, ASPHER+, NON 1W SPHER+, RADIUS??, SEMIDIAMETER?, ABBE+, DISPERS+, CHROMAT+, VARIANC+

**C. DOCUMENTS CONSIDERED TO BE RELEVANT**

| Category* | Citation of document, with indication, where appropriate, of the relevant passages | Relevant to claim No. |
|---|---|---|
| X | CN101046546A（FUJI PHOTO OPTICAL CO LTD）03 Oct. 2007（03.10.2007）pages 4-7, figs. 1, 8 | 1-5 |
| A | | 6 |
| X | CN101226271A（DALI PHOTOELECTRIC CO LTD）23 Jul. 2008（23.07.2008）pages 9-11, figs. 3, 9 | 1-5 |
| A | | 6 |
| X | CN101276038A（FUJI PHOTO OPTICAL CO LTD）01 Oct. 2008（01.10.2008）pages 5-9, figs. 1, 8 | 1-5 |
| A | | 6 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 26 Feb. 2011 (26.02.2011) | **10 Mar. 2011 (10.03.2011)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | CHEN,Yajuan Telephone No. (86-10)62085755 |

Form PCT/ISA /210 (second sheet) (July 2009)

## INTERNATIONAL SEARCH REPORT

| International application No. |
| --- |
| PCT/CN2010/076456 |

C (Continuation).     DOCUMENTS CONSIDERED TO BE RELEVANT

| Category* | Citation of document, with indication, where appropriate, of the relevant passages | Relevant to claim No. |
| --- | --- | --- |
| X | CN101414046A（ASIA OPTICAL KK）22 Apr. 2009（22.04.2009）pages 5-8, figs. 1 | 1-5 |
| A | | 6 |
| A | CN1749796A（HONGFUJIN PRECISION IND SHENZHEN CO LTD）22 Mar. 2006（22.03.2006） the whole | 1-6 |
| A | CN1877384A（HONGFUJIN PRECISION IND SHENZHEN CO LTD）13 Dec. 2006（13.12.2006）the whole | 1-6 |

Form PCT/ISA /210 (continuation of second sheet ) (July 2009)

## INTERNATIONAL SEARCH REPORT
### Information on patent family members

| | International application No. |
|---|---|
| | PCT/CN2010/076456 |

| Patent Documents referred in the Report | Publication Date | Patent Family | Publication Date |
|---|---|---|---|
| CN101046546A | 03.10.2007 | CN100470292C | 18.03.2009 |
| | | EP1840617A | 03.10.2007 |
| | | US2007229981A | 04.10.2007 |
| | | US7295384B | 13.11.2007 |
| | | JP2008052233A | 06.03.2008 |
| CN101226271A | 23.07.2008 | CN101226271B | 08.09.2010 |
| CN101276038A | 01.10.2008 | CN101276038B | 01.12.2010 |
| | | US2008239510A | 02.10.2008 |
| | | US7660050B | 09.02.2010 |
| | | JP2008241999A | 09.10.2008 |
| CN101414046A | 22.04.2009 | None | |
| CN1749796A | 22.03.2006 | CN100561286C | 18.11.2009 |
| | | US2006061882A | 23.03.2006 |
| | | US7362518B | 22.04.2008 |
| CN1877384A | 13.12.2006 | CN100529829C | 19.08.2009 |
| | | US2006279855A | 14.12.2006 |
| | | US7212354B | 01.05.2007 |

Form PCT/ISA /210 (patent family annex) (July 2009)

# INTERNATIONAL SEARCH REPORT

International application No.

PCT/CN2010/076456

**A. CLASSIFICATION OF SUBJECT MATTER**

G02B 13/18 (2006.01) i

G02B 9/14 (2006.01) i

**EP 2 444 831 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200510035220